# EUROPÄISCHE PATENTANMELDUNG

(11) **EP 1 262 444 A1**
(43) Veröffentlichungstag der Anmeldung: **04.12.2002**
(21) Anmeldenummer: 02009973.5
(22) Anmeldetag: 03.05.2002
(51) Int. Cl.: B66F 9/20, B66F 17/00, B62B 3/06

(54) **Fingerschutz für ein deichselgelenktes Flurförderzeug**

(30) Priorität: 31.05.2001 DE 10126635
(71) Anmelder: Still & Saxby S.à.r.l., 77107 Meaux-Cedex (FR)
(72) Erfinder: Abonnet, Jacqes, St. Laurent, 58200 Cosne/Loire (FR); Wident, Alain, 60480 Froissy (FR)
(74) Vertreter: Lang, Michael (DE)

(57) **Zusammenfassung**

Gegenstand der Erfindung ist ein deichselgelenktes Flurförderzeug mit einer um eine horizontale Achse schwenkbaren Deichsel (1) und einer mit Abstand zu der horizontalen Achse an der Deichsel (1) angreifenden Gasfeder (2), die sich innerhalb eines Trägerbauteils (3) nach unten erstreckt, wobei sich bei einem Drehen der Deichsel (1) um die horizontale Achse der Abstand zwischen der Oberkante des Trägerbauteils (3) und der Gasfeder (2) und/oder der Abstand zwischen der Deichsel (1) und der Oberkante der Gasfeder (2) verändert. Dabei ist im Bereich der Gasfeder (2) eine Schutzkappe (4) befestigt, die ein Einklemmen eines Fingers einer Bedienperson in einen Spalt (5) zwischen der Gasfeder (2) und dem Trägerbauteil (3) und/oder einen Spalt (6) zwischen der Deichsel (1) und der Oberkante der Gasfeder (2) verhindert.

## Beschreibung

Die Erfindung betrifft ein deichselgelenktes Flurförderzeug mit einer um eine horizontale Achse schwenkbaren Deichsel und einer mit Abstand zu der horizontalen Achse an der Deichsel angreifenden Gasfeder, die sich innerhalb eines Trägerbauteils nach unten erstreckt, wobei sich bei einem Schwenken der Deichsel um die horizontale Achse der Abstand zwischen der Oberkante des Trägerbauteils und der Gasfeder und/oder der Abstand zwischen der Deichsel und der Oberkante der Gasfeder verändert.

Gattungsgemäße Flurförderzeuge werden in der Regel als Mitgängerfahrzeuge betrieben, wobei eine Bedienperson vor oder neben dem Flurförderzeug geht und durch Drehen der Deichsel um eine vertikale Achse das Flurförderzeug lenkt. Um den Fahrantrieb betätigen zu können, wird die Deichsel ausgehend von ihrer in der Ruheposition nahezu senkrechten Stellung nach unten geschwenkt. Zum Zweck dieser beiden Bedienmöglichkeiten ist die Deichsel mit einem Handgriff ausgestattet.

Während des nach unten Schwenkens der Deichsel kommt es immer wieder zu Verletzungen der Bedienperson durch Einklemmen von Fingern. Die Gasfeder ist in einem rohrförmigen Trägerelement angeordnet, in dem sie in seitlicher Richtung bewegt, geneigt sowie zusammengedrückt werden kann. Zwischen der Gasfeder und dem Trägerelement befindet sich ebenso wie zwischen der Deichsel und der Oberkante der Gasfeder ein Spalt. Wird die Deichsel nach unten geschwenkt, so verringern sich die Breiten der genannten Spalte und darin befindliche Finger können eingeklemmt und gequetscht werden.

Der Erfindung liegt daher die Aufgabe zugrunde, eine Schutzvorrichtung zur Verfügung zu stellen, welche die Verletzungsgefahr für eine Bedienperson bei einem Schwenken der Deichsel um die horizontale Achse abwendet.

Diese Aufgabe wird erfindungsgemäß dadurch gelöst, dass im Bereich der Gasfeder eine Schutzkappe befestigt ist, die ein Einklemmen eines Fingers einer Bedienperson in einen Spalt zwischen der Gasfeder und dem Trägerbauteil und/oder einen Spalt zwischen der Deichsel und der Oberkante der Gasfeder verhindert.Die durch das Neigen der Gasfeder gegenüber ihrer senkrechten Position bei einem Schwenken der Deichsel nach unten verringerten Spalte werden durch die Schutzkappe von vornherein so schmal gehalten, dass kein Finger hineinpasst.

Es ist aus Gründen der einfachen Herstellbarkeit zweckmäßig, wenn die Schutzkappe aus Kunststoff ausgebildet ist.

Ebenso ist es vorteilhaft, wenn die Schutzkappe, vorzugsweise auf die Gasfeder, aufsteckbar ist. Sie kann so leicht montiert werden, was insbesondere dann sehr nützlich ist, wenn sie ausgetauscht werden muss oder Wartungsarbeiten im Bereich der Gasfeder oder des Trägerbauteils notwendig sind.

Für eine weitere Verminderung der Verletzungsgefahr ist es weiterhin zweckmäßig, wenn der obere Bereich der Schutzkappe in Richtung der Gasfeder um eine horizontale Achse gekrümmt ist. Bei einem Schwenken der Deichsel nach unten bewegt sie sich mit ihrem unteren Ende auf einer Kreisbahn entlang der Krümmung der Schutzkappe, so dass hier ein Einklemmen des Fingers unmöglich wird.

Weitere Vorteile und Einzelheiten werden anhand des in den Figuren dargestellten Ausführungsbeispiels näher erläutert. Dabei zeigt
- Figur 1: eine erfindungsgemäße Schutzvorrichtung bei senkrechter Deichsel in perspektivischer Ansicht,
- Figur 2: eine erfindungsgemäße Schutzvorrichtung bei senkrechter Deichsel im Schnitt
- Figur 3: eine erfindungsgemäße Schutzvorrichtung bei geneigter Deichsel in perspektivischer Ansicht,
- Figur 4: eine erfindungsgemäße Schutzvorrichtung bei geneigter Deichsel im Schnitt.

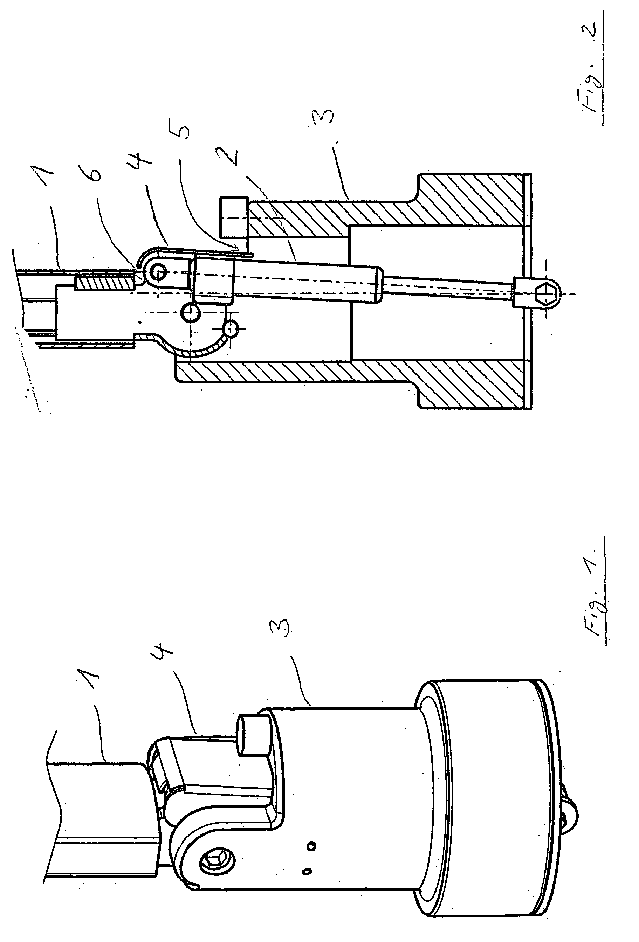

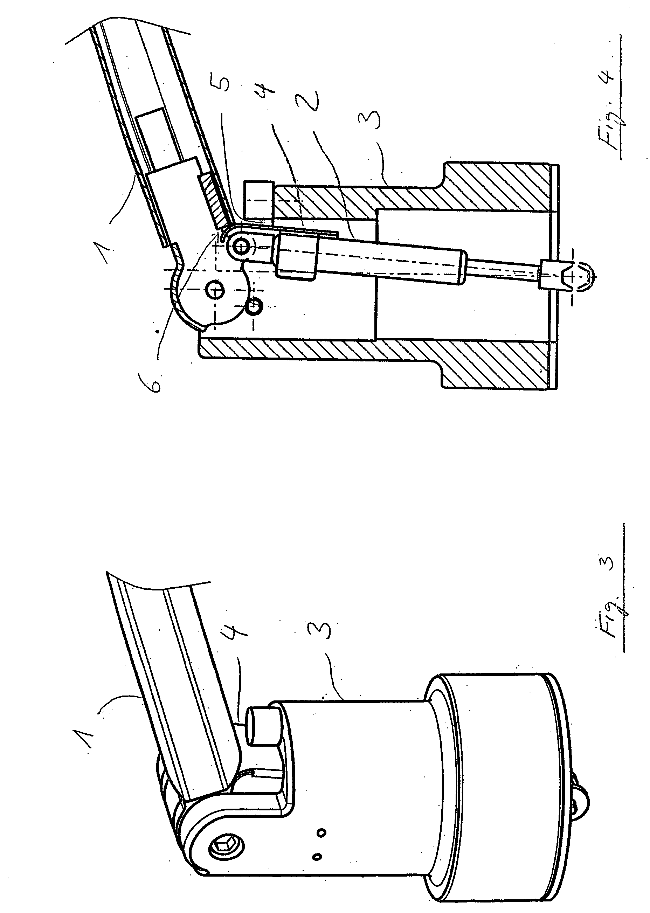

In den Figuren 1 und 2 ist eine erfindungsgemäße Schutzvorrichtung bei einer senkrechten Deichselstellung dargestellt. Eine Deichsel 1 ist mit einer Gasfeder 2 gelenkig verbunden, welche in einem Trägerbauteil 3 angeordnet und an dessen Ende gelenkig so befestigt ist, dass sie sich um den Befestigungspunkt drehen kann. Die Gasfeder 2 dient dabei der Kompensation der Gewichtskraft der Deichsel 1 und dämpft außerdem deren Bewegung. Auf die Gasfeder 2 ist eine erfindungsgemäße Schutzkappe 4 aufgesteckt, die sich an ihrem oberen Ende in Richtung des abgerundeten Abschlusses der Gasfeder 2 krümmt. Weiterhin erkennt man einen Spalt 5 zwischen der Oberkante des Trägerbauteils 3 und der Gasfeder 2 sowie einen Spalt 6 zwischen der Deichsel 1 und der Oberkante der Gasfeder 2. Die beiden Spalte 5 und 6 sind bereits in der Ausgangsstellung so schmal, dass eine Bedienperson keinen Finger hineinstecken kann und somit eine Verletzung bei dem Schwenken der Deichsel 1 nach unten vermieden wird. Hingegen wäre es bei der Ausführung ohne die Schutzkappe 4 möglich, einen Finger in die genannten Spalte 5 und 6 zu stecken und so käme es bei einem nach unten Schwenken der Deichsel 1 zu einer Quetschung des Fingers.

In den Figuren 3 und 4 ist eine identische Anordnung der Schutzvorrichtung bei einer geneigten Deichselstellung dargestellt.

Bewegt eine Bedienperson die Deichsel 1 zur Steuerung des Fahrantriebs aus der Position in den Figuren 1 und 2 nach unten, so dreht sich die Deichsel 1 um eine in der Darstellung nicht dargestellte horizontale Achse, die aus der Zeichnung herausweist. Bei diesem Vorgang wird die Gasfeder 2 aufgrund ihrer Verbindung mit der Deichsel 1 zeitgleich nach rechts bewegt und zusammengedrückt. Durch diese Schwenkbewegung sowohl der Deichsel 1 als auch der Gasfeder 2 werden die beiden Spalte 5 und 6 verringert und der obere Spalt 6 zwischen der Gasfeder 2 und der Deichsel 1 sogar vollkommen geschlossen.

Es ist durch die Schutzkappe in jeglicher Deichselstellung ausgeschlossen, dass sich eine Bedienperson aufgrund einer Unachtsamkeit einen ihrer Finger in einen der beiden oben genannten Spalte 5 und 6 einklemmt. Somit wird eine wesentliche Verbesserung im Bereich der Arbeitssicherheit erreicht.

## Patentansprüche

1. Deichselgelenktes Flurförderzeug mit einer um eine horizontale Achse schwenkbaren Deichsel (1) und einer mit Abstand zu der horizontalen Achse an der Deichsel (1) angreifenden Gasfeder (2), die sich innerhalb eines Trägerbauteils (3) nach unten erstreckt, wobei sich bei einem Drehen der Deichsel (1)um die horizontale Achse der Abstand zwischen der Oberkante des Trägerbauteils (3) und der Gasfeder (2) und/oder der Abstand zwischen der Deichsel (1) und der Oberkante der Gasfeder (2) verändert, **dadurch gekennzeichnet, dass** im Bereich der Gasfeder (2) eine Schutzkappe (4) befestigt ist, die ein Einklemmen eines Fingers einer Bedienperson in einen Spalt (5) zwischen der Gasfeder (2) und dem Trägerbauteil (3) und/oder einen Spalt (6) zwischen der Deichsel (1) und der Oberkante der Gasfeder (2) verhindert.

2. Deichselgelenktes Flurförderzeug nach Anspruch 1, **dadurch gekennzeichnet, dass** die Schutzkappe (4) aus Kunststoff ausgebildet ist.

3. Deichselgelenktes Flurförderzeug nach Anspruch 1 oder 2, **dadurch gekennzeichnet, dass** die Schutzkappe (4) aufsteckbar ist, vorzugsweise auf die Gasfeder (2).

4. Deichselgelenktes Flurförderzeug nach einem der Ansprüche 1 bis 3, **dadurch gekennzeichnet, dass** der obere Bereich der Schutzkappe (4) in Richtung der Gasfeder (2) um eine horizontale Achse gekrümmt ist.
